# EUROPEAN PATENT APPLICATION

(11) **EP 3 573 004 A1**
(43) Date of publication of application: **27.11.2019**
(21) Application number: 18741335.6
(22) Date of filing: 05.01.2018
(51) Int. Cl.: G06Q 30/02, H04W 88/02, G06Q 30/06

(54) **INTERNET SHOPPING MALL MANAGEMENT METHOD**

(30) Priority: 23.01.2017 KR 20170010389
(71) Applicant: Costdown Co.,Ltd., Anseong-si, Gyeonggi-do 17547 (KR)
(72) Inventor: JUNG, Dae Young, Daejeon 35018 (KR)
(74) Representative: Beetz & Partner mbB
(86) International application number: PCT/KR2018/000255
(87) International publication number: WO 2018/135785

(57) **Abstract**

Provided is an Internet shopping mall management method comprising the steps of, providing, as a transaction point, a preset rate for the amount of a purchase having occurred in at least one purchase terminal, extracting, from among the at least one purchase terminal, at least one purchase terminal having exceeded a reference transaction amount, assortatively classifying the at least one purchase terminal into a preset section on the basis of the transaction amount of the extracted at least one purchase terminal, and providing, to the classified at least one purchase terminal for each level as an additional point, the distribution of company sales of a percent having already been mapped and stored for each level.

## Description

### [Technical Field]

The present invention relates to an Internet shopping mall management method and, more specifically, to a method of redistributing company revenue according to the amount of purchase and member recommendations and comprehensively providing a point management chart.

### [Background Art]

Recently, Internet shopping malls continue significant investments in advertisements and are jumping into cutthroat competition while readily risking profit loss from selling their goods, and customers have difficulty in picking a desired shopping mall due to flooding advertisements.

A method of managing shopping mall members is to award cash on online transactions. Korean Patent Application Publication No. 10-2014-0031449, published on March 13, 2014 discloses a configuration which enables transactions between members in a shopping mall and purchase of goods in a shopping mall or offline store using points to thereby provide more satisfaction to members using points and which may turn agent points which occur upon inter-member transaction using points into the shopping mall's benefit.

However, awarding points for purchase is recently commonplace in shopping mall business and, thus, would not be enough to attract customers. Further, point purchase may lead to other consumption and thus would not flourish. If points are not cashed and use of points is limited to some stores, the value of points may be lowered and customers would be more reluctant to use points.

### [Detailed Description of the Invention]

### [Technical Problem]

According to an embodiment of the present invention, there may be provided an Internet shopping mall managing method which may differentially distribute company profits to customers who made purchase in a predetermined amount or more to lead to more purchasing power, and when a referral occurs, separately award referral points to thereby enhance advertisement effects, wherein the points may be cashed and distributed to thereby make points more useful while attracting more customers. However, the objects of the embodiments are not limited thereto, and other objects may also be present.

### [Technical Solution]

According to an embodiment of the present invention, a technical means to achieve the foregoing objectives may include awarding a preset proportion of an amount of purchase made on at least one purchaser terminal as transaction points, extracting at least one of the at least one purchaser terminal which exceeds a reference transaction amount, dividing and classifying the at least one purchaser terminal into preset levels based on the amount of transaction made on the at least one purchaser terminal extracted, and awarding a dividend for company revenue in percentages pre-mapped and stored per level to the at least one purchaser terminal classified per level as additional points.

### [Advantageous Effects]

According to an embodiment of the present invention, it is possible to differentially distribute company profits to customers who made purchase in a predetermined amount or more to lead to more purchasing power, and when a referral occurs, separately award referral points to thereby enhance advertisement effects, wherein the points may be cashed and distributed to thereby make points more useful while attracting more customers.

### [Brief Description of Drawings]

Fig. 1 is a view illustrating an Internet shopping mall managing system according to an embodiment of the present invention;
Fig. 2 is a view illustrating a configuration of an Internet shopping mall managing server as shown in Fig. 1;
Fig. 3 is a view illustrating a page for notifying revenue and points in an Internet shopping mall according to an embodiment of the present invention;
Fig. 4 is a view illustrating a screen including per-type points and a dividend request according to an embodiment of the present invention;
Fig. 5 is a view illustrating a process of transmitting and receiving data between components of Fig. 1 according to an embodiment of the present invention; and
Fig. 6 is a flowchart illustrating a method of managing an Internet shopping mall according to an embodiment of the present invention.

### [Mode for Carrying out the Invention]

Hereinafter, exemplary embodiments of the inventive concept will be described in detail with reference to the accompanying drawings. The inventive concept, however, may be modified in various different ways, and should not be construed as limited to the embodiments set forth herein. Like reference denotations may be used to refer to the same or similar elements throughout the specification and the drawings. However, the present invention may be implemented in other various forms and is not limited to the embodiments set forth herein. For clarity of the present invention, irrelevant parts are removed from the drawings, and similar reference denotations are used to refer to similar elements throughout the specification.

In embodiments of the present invention, when an element is "connected" with another element, the element may be "directly connected" with the other element, or the element may be "electrically connected" with the other element via an intervening element. When an element "comprises" or "includes" another element, the element may further include, but rather than excluding, the other element, and the terms "comprise" and "include" should be appreciated as not excluding the possibility of presence or adding one or more features, numbers, steps, operations, elements, parts, or combinations thereof.

When the measurement of an element is modified by the term "about" or "substantially," if a production or material tolerance is provided for the element, the term "about" or "substantially" is used to indicate that the element has the same or a close value to the measurement and is used for a better understanding of the present invention or for preventing any unscrupulous infringement of the present invention where the exact or absolute numbers are mentioned. As used herein, "step of" A or "step A-ing" does not necessarily mean that the step is one for A.

As used herein, the term "part" may mean a unit or device implemented in hardware, software, or a combination thereof. One unit may be implemented with two or more hardware devices or components, or two or more units may be implemented in a single hardware device or component.

As used herein, some of the operations or functions described to be performed by a terminal or device may be, instead of the terminal or device, performed by a server connected with the terminal or device. Likewise, some of the operations or functions described to be performed by a server may be performed by a terminal or device connected with the server, instead of the server.

As used herein, some of the operations or functions described to be mapped or matched with a terminal may be interpreted as mapping or matching the unique number of the terminal, which is identification information about the terminal, or personal identification information.

Hereinafter, embodiments of the present invention are described in detail with reference to the accompanying drawings.

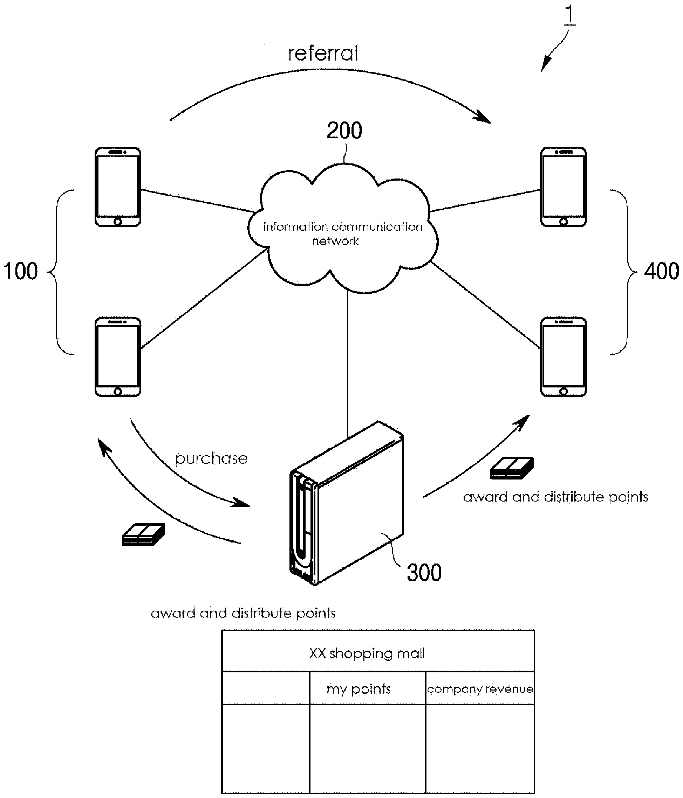

Fig. 1 is a view illustrating an Internet shopping mall managing system according to an embodiment of the present invention. Referring to Fig. 1, the Internet shopping mall managing system 1 may include at least one purchaser terminal 100, an Internet shopping mall managing server 300, and at least one referee terminal 400. However, the Internet shopping mall managing system 1 is merely an example, and the scope of the present invention is not limited by Fig. 1.

The components of Fig. 1 are generally connected together via a network 200. For example, referring to Fig. 1, the at least one purchaser terminal 100 may be connected to the Internet shopping mall managing server 300 via the network 200. The Internet shopping mall managing server 300 may be connected with the at least one purchaser terminal 100 and the at least one referee terminal 400 via the network 200. The at least one referee terminal 400 may be connected to the Internet shopping mall managing server 300 via the network 200.

Here, "network" 200 means a connecting structure to enable exchanging of information between nodes, such as a plurality of terminals and servers. Examples of such network 200 may include, but are not limited to, a 3rd Generation Partnership Project (3GPP) network, a Long Term Evolution (LTE) network, a Long Term Evolution-Advanced (LTE-A) network, a 5th Generation Partnership Project (5GPP) network, a World Interoperability for Microwave Access (WIMAX) network, an Internet network, a Local Area Network (LAN) network, a Wireless LAN network, a Wide Area Network (WAN) network, a Personal Area Network (PAN) network, a Bluetooth network, a satellite broadcast network, an analog broadcast network, and a Digital Multimedia Broadcasting (DMB) network. The at least one purchaser terminal 100, the Internet shopping mall managing server 300, and the at least one referee terminal 400 shown in Fig. 1 should not be interpreted as limited to the ones shown in Fig. 1.

The at least one purchaser terminal 100 may be a terminal of a purchaser who purchases goods through an Internet shopping mall. The at least one purchaser terminal 100 may be a terminal which has transaction points depending on the amount of purchase. When the amount of purchase exceeds a predetermined amount, the at least one purchaser terminal 100 may be a terminal which receives preset points of the company revenue as additional points. The at least one purchaser terminal 100 may be a terminal which receives referral points when referring other users. The at least one purchaser terminal 100 may be a terminal which differentially receives referral points depending on the amount of purchase by other users referred. The at least one purchaser terminal 100 may be a terminal which may periodically sum up points and apply for a dividend.

Here, the at least one purchaser terminal 100 may be implemented as a computer which may access a remote server or terminal via the network 200. Here, the computer may be, e.g., a or web browser-equipped laptop computer or desktop computer. At this time, the at least one purchaser terminal 100 may be implemented as a terminal which may access a remote server or terminal via the network 200. The at least one purchaser terminal 100 may be, e.g., a portable mobile wireless communication device examples of which may include navigation devices, a Personal Communication System (PCS), Global System for Mobile communications (GSM), Personal Digital Cellular (PDC), Personal Handyphone System (PHS), Personal Digital Assistant (PDA), International Mobile Telecommunication (IMT)-2000, Code Division Multiple Access (CDMA)-2000, W-Code Division Multiple Access (W-CDMA), Wireless Broadband Internet (WiBro) terminal, a smartphone, a smartpad, tablet PC, or any other various types of handheld wireless communication devices.

The Internet shopping mall managing server 300 may be a server which transmits an Internet shopping mall managing service webpage, program, application, app page, and user interface to the at least one purchaser terminal 100 and the at least one referee terminal 400. Here, the Internet shopping mall managing server 300 may be a server which awards preset percent of points as per purchase made on the purchaser terminal 100. Further, in a case where the purchaser terminal 100 refers and the referee terminal 400 accesses the Internet shopping mall or makes a purchase, the Internet shopping mall managing server 300 may be a server which awards referral points mapped to each event to the purchaser terminal 100. Where the amount of purchase made by the purchaser terminal 100 exceeds a preset amount, the Internet shopping mall managing server 300 may be a server which awards additional points in proportion to the company's revenue. Further, the Internet shopping mall managing server 300 may be a server which provides the company's revenue and points on one page.

At this time, the Internet shopping mall managing server 300 may be implemented as a computer capable of accessing a remote server or terminal via the network 200. Here, the computer may be, e.g., a or web browser-equipped laptop computer or desktop computer.

The at least one referee terminal 400 may be a terminal which is referred by the purchaser terminal 100 to access or register in the Internet shopping mall or to make purchase. Further, the at least one referee terminal 400 may be a terminal which receives transaction points depending on the amount of purchase like the purchaser terminal 100 does. In the case of exceeding a preset transaction amount, the at least one referee terminal 400 may be a terminal which receives additional points and, if one is referred, receives referral points from the referee's subscription, registration, or purchase.

Here, the at least one referee terminal 400 may be implemented as a computer which may access a remote server or terminal via the network 200. Here, the computer may be, e.g., a or web browser-equipped laptop computer or desktop computer. At this time, the at least one referee terminal 400 may be implemented as a terminal which may access a remote server or terminal via the network 200. The at least one referee terminal 400 may be, e.g., a portable mobile wireless communication device examples of which may include navigation devices, a Personal Communication System (PCS), Global System for Mobile communications (GSM), Personal Digital Cellular (PDC), Personal Handyphone System (PHS), Personal Digital Assistant (PDA), International Mobile Telecommunication (IMT)-2000, Code Division Multiple Access (CDMA)-2000, W-Code Division Multiple Access (W-CDMA), Wireless Broadband Internet (WiBro) terminal, a smartphone, a smartpad, tablet PC, or any other various types of handheld wireless communication devices.

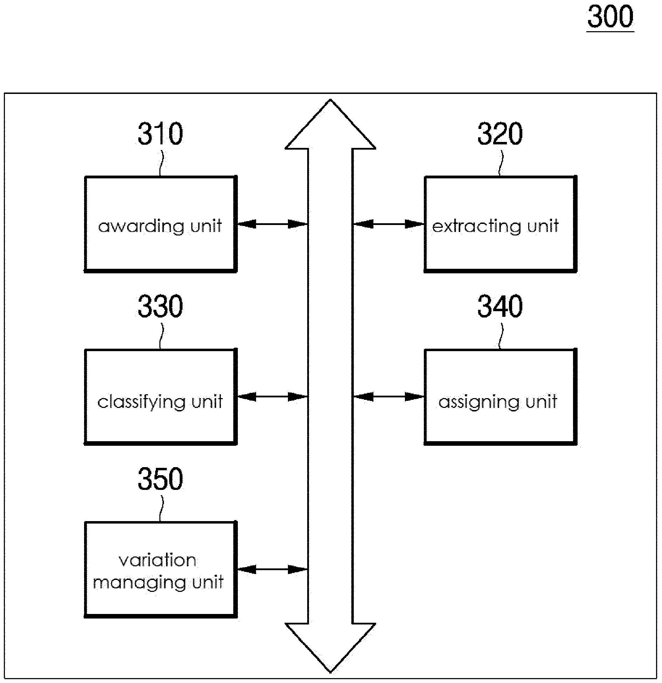

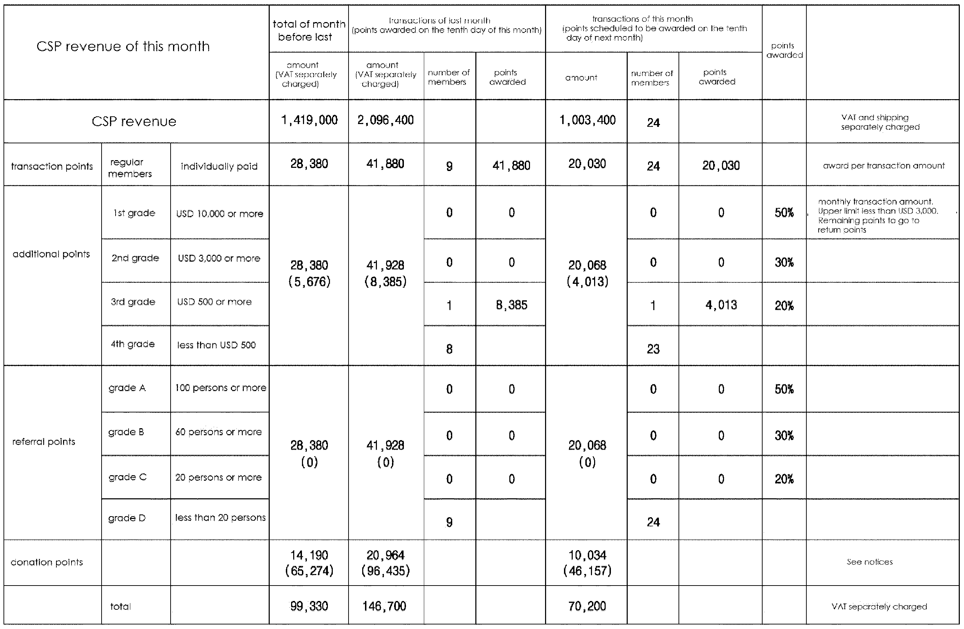

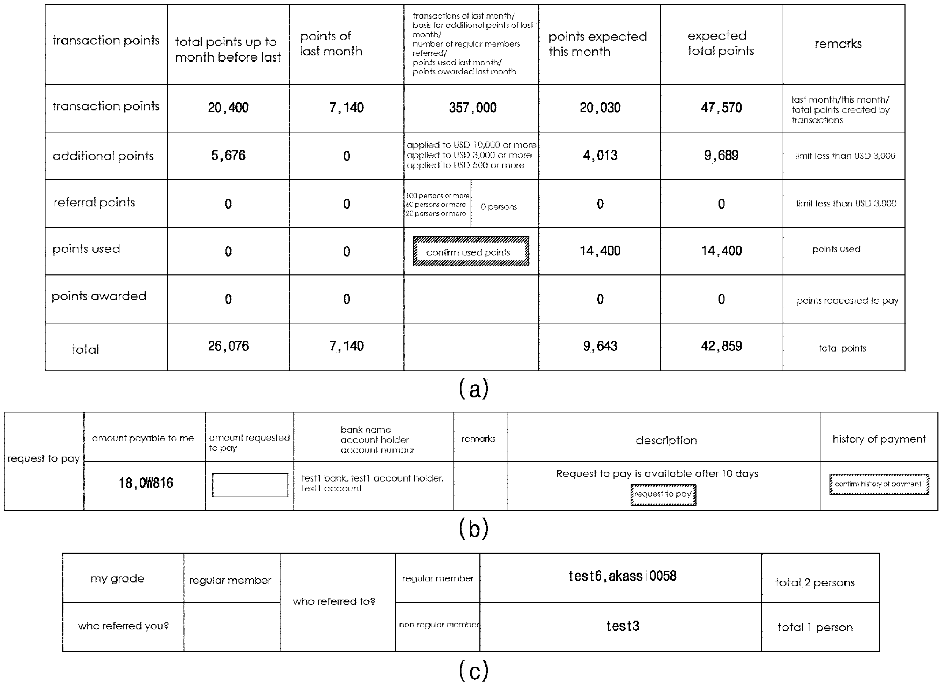

Fig. 2 is a view illustrating a configuration of an Internet shopping mall managing server as shown in Fig. 1. Fig. 3 is a view illustrating a page for notifying revenue and points in an Internet shopping mall according to an embodiment of the present invention. Fig. 4 is a view illustrating a screen including per-type points and a dividend request according to an embodiment of the present invention.

Referring to Fig. 2, according to an embodiment of the present invention, an Internet shopping mall managing server 300 may include an awarding unit 310, an extracting unit 320, a classifying unit 330, an assigning unit 340, and a variation managing unit 350.

According to an embodiment of the present invention, in a case where the Internet shopping mall managing server 300 or other server (not shown) interworking with the Internet shopping mall managing server 300 transmits an Internet shopping mall managing service application, program, app page, or webpage to at least one purchaser terminal 100 and at least one referee terminal 400, the at least one purchaser terminal 100 may install or open the Internet shopping mall managing service application, program, app page, or webpage. Further, a service program may be driven on the at least one purchaser terminal 100 and the at least one referee terminal 400 using a script executed on a web browser. Here, the web browser may be a program or application that enables use of world wide web (WWW) services or that receives and shows hypertext written in the hypertext mark-up language (HTML), and the web browser may include, e.g., Netscape, Explorer, or Chrome. The term "application" may mean an application executed on the terminal, and the application may include, e.g., an app running on a mobile terminal, e.g., a smartphone.

At this time, connection of network 200 means that the at least one purchaser terminal 100, the Internet shopping mall managing server 300, and the at least one referee terminal 400 create a communication object at a communication contact point for communication with a terminal connected to the network 200. The Internet shopping mall managing server 300 may exchange data via the communication object.

According to an embodiment of the present invention, the Internet shopping mall managing service may provide four types of points. At this time, the points may include transaction points which are provided to the member in, e.g., 2% of the transaction amount, additional points which are awarded to persons, who make lots of transactions, in 2% of the company revenue differentially as per grade 1 to grade 3, referral points which are awarded to members, who advertise the company to attract many referees, differentially as per three grades in 2% of the company revenue, and donation points which are provided for returning 1% of the company revenue to society.

The awarding unit 310 may award a preset proportion of the amount of purchase made on the at least one purchaser terminal 100 as transaction points. Here, the preset proportion may be 2% of the amount of transaction but not limited thereto. Further, although the proportion may be fixed to 2% of the transaction amount, the proportion may be varied depending on profit, the purchaser's purchasing conditions, the seller's selling conditions, the kind of goods, or preference.

The extracting unit 320 may extract at least one of the at least one purchaser terminal 100, which have exceeded a reference transaction amount. At this time, the extracting unit 320 may award additional points to people who made lots of transactions according to a reference which may be, e.g., 500 dollars or more.

The classifying unit 330 may divide or classify the at least one purchaser terminal 100 into preset sections based on the amount of transaction made on the at least one extracted purchaser terminal 100. For example, the first grade for additional points may be transactions worth 10,000 dollars or more or 1% of the company revenue, the second grade may be transactions worth 3,000 USD to 9,990 dollars or 0.6% of the company revenue. The third grade may be transactions worth 500 dollars to 2,990 dollars or 0.4% of the company revenue. Accordingly, the classifying unit 330 may divide 2% of the company's total revenue into the first to third grades and distribute the revenue.

The assigning unit 340 may assign distributions for the company revenue of a percentage previously mapped and stored per level, as additional points, to the at least one purchaser terminal 100 per level classification. At this time, the percentage previously mapped and stored per level may increase as the level depending on the amount of transaction goes up.

Where such an event where the at least one referee terminal 400 referred by the at least one purchaser terminal 100 accesses the Internet shopping mall managing server 300 after the awarding unit 310 awards a preset proportion of the amount of transaction made on the at least one purchaser terminal 100, as transaction points, the assigning unit 340 may assign referral points to the at least one purchaser terminal 100 which is the referrer's terminal. Here, the referral points may be based on percentages differentially assigned as per grades based on the number of referrers.

The access event may include at least one event of look-up, sign-up, and purchase of the at least one referee terminal 400 on the Internet shopping mall managing server 300. For example, although referrer A refers referee B, referee B may simply search the shopping mall for goods but not apply for membership. Referee B has membership to the shopping mall but make no purchase from the shopping mall. Referee B may make purchase. As such, regardless of how much referrer A advertises the shopping mall, referrer A's advertisement effects may occur in various manners. Accordingly, referral points may be awarded differentially for when simply publicizing the shopping mall (B's look-up), when publicizing and leading to registering (B's sign-up), and when leading to purchase (B's purchase). For example, when B looks up, such an effect as pay-per-click may be obtained. Thus, points corresponding to the advertisement fee may be awarded. Upon signing up, B ends up providing information through which continuous advertising is possible and points may thus be awarded for providing such information. However, the present invention is not limited thereto, and it will be apparent that there may be other points depending on the results of various advertisements.

Referral points may be calculated based on the amount of purchase and the cycle of purchase and the number of referrers when referral leads to purchase on the at least one referee terminal 400, and the grades for referral points may be updated periodically or in real-time based on the number of referrals and the amount of purchase on the at least one referee terminal 400.

Further, the Internet shopping mall managing server 300 may provide a page on which transaction points, additional points, and referral points, and the revenue of the Internet shopping mall are provided and output from the Internet shopping mall managing server 300.

Transaction points may be provided based on the amount of purchase, additional points may be provided in a table corresponding to the classified levels, referral points may be provided in a table corresponding to the assigned grades, and each point type depending on the total of the month before last, transactions of the last month, and transactions of this month may be provided in one table.

Further, the Internet shopping mall managing server 300 may periodically provide cash corresponding to the transaction points, additional points, and referral points at the request or settings of the at least one purchaser terminal 100.

The variation managing unit 350 may update the amount of inventory, price variations, and shipping time about the product corresponding to a keyword entered through the at least one purchaser terminal 100 before the awarding unit 310 awards a preset proportion of the amount of purchase made on the at least one purchaser terminal 100 as transaction points. When information about the product for sale is varied, the variation managing unit 350 may output the varied information to the at least one purchaser terminal 100.

For example, if information about a product has been varied but the page containing the information has yet to be updated, the purchaser might not make purchase. For example, a user may decide to buy product A on an online shopping mall because the shopping mall offers the lowest price for product A or because the shopping mall provides a three-day delivery option although the price they offer is higher than the other shopping malls in which case, if the user happens to know changes in the information later or through the payment screen, the user would change his mind and try to re-search or re-purchase which is bothering. If such an occasion repeatedly happens, the purchaser would not trust the shopping mall and purchase goods on the shopping mall. As such, the shopping mall would lose customers. The present invention may identify updated information in real-time and provide precise information to customers, thereby preventing the shopping mall from losing customers' trust due to wrong information.

Further, the Internet shopping mall managing server 300 may allow the user to check all necessary security items before entering purchase-related information on the purchaser terminal 100 and to previously perceive that unless the checked items are installed or activated, reentry of information is needed or page may be reloaded, thereby preventing the user from reentering purchase information. For example, where the purchaser terminal 100 is not a mobile terminal, the purchaser terminal 100 may have many security programs installed in light of the Korean government's online security policy. Further, various programs are applied to each shopping mall and, unless all the programs have been installed, all the information may be lost when the payment button is clicked and a redirecting signal to request to install the programs may be generated. The Internet shopping mall managing server 300 may previously indicate that some programs need to be installed for purchase when purchase information is entered and, to prepare for information loss due to redirecting, allow the pre-entered information to be stored in the purchaser terminal 100 so that the information may be automatically entered later and after auto-entry, an interface for confirming or authorizing is provided.

An Internet shopping mall managing service with the above-described features is described below with reference to Figs. 3 and 4.

Referring to Fig. 3, the Internet shopping mall managing server 300 may provide a company revenue and point notice screen. For example, the Internet shopping mall managing server 300 may output, on the main screen, the company's revenue and information about how various points have been distributed thus far. The Internet shopping mall managing server 300 may also output additional points or other points through the company "revenue and point notice" so that each member is previously aware how many points he has.

The Internet shopping mall managing server 300 may provide a screen to display referral points, e.g., how many persons the member has referred and how many points are expected to add up.

Referring to Fig. 4, the Internet shopping mall managing server 300 may provide, on a single page (a), where transaction points (purchase points) are provided in proportion to the amount of transaction, the member's additional points and referral points are known in detail, and the member may be aware how many points have been accrued and used at a glance.

The Internet shopping mall managing server 300 may provide an interface (b) through which points may be paid as cash. Further, the Internet shopping mall managing server 300 may provide information about, e.g., the date the member may apply for payment, the amount payable, and the account for receiving payment.

As shown in (c), the Internet shopping mall managing server 300 may output the persons who the member has referred, referees, how many regular members are present, and how much the referees have consumed, and other information.

What is not described regarding the Internet shopping mall managing method in connection with Figs. 2 to 4 is the same or easily inferred from what has been described regarding the Internet shopping mall managing method in connection with Fig. 1, and no detailed description thereof is thus presented.

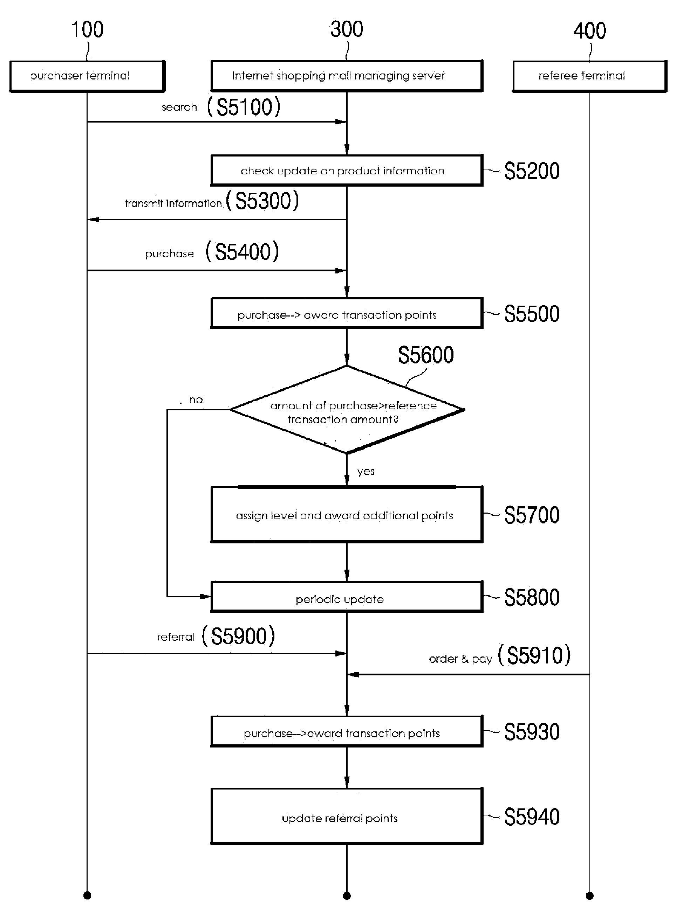

Fig. 5 is a view illustrating a process of transmitting and receiving data between components of Fig. 1 according to an embodiment of the present invention. An example process of signal transmission and reception is described below with reference to Fig. 5. However, embodiments of the present invention are not limited thereto, and it is apparent to a skilled artisan that various changes or modifications may be made thereto.

Referring to Fig. 5, when the purchaser terminal 100 searches for a product (S5100), the Internet shopping mall managing server 300 identifies whether product information has been updated (S5200) and then transmits a result of search (S5300).

Where a purchase event to purchase a product occurs on the purchaser terminal 100 (S5400), the Internet shopping mall managing server 300 awards preset transaction points depending on the amount of purchase (S5500).

Where the amount of purchase exceeds a reference transaction amount (S5600), the Internet shopping mall managing server 300 divides levels and awards additional points corresponding to a preset percentage of the company revenue (S5700).

Since the levels are not fixed but varied depending on the amount of purchase, the Internet shopping mall managing server 300 periodically or in real-time updates the levels depending on the amount of purchase (S5800).

Where the purchaser terminal 100 refers others (S5900), the Internet shopping mall managing server 300 may award referral points to the purchaser terminal 100 depending on the number of referees and may award referral points in proportion to the amount of purchase made by the referees (S5910 and S5930).

The Internet shopping mall managing server 300 updates information about the purchaser terminal 100 with the awarded referral points (S5940).

The above-described steps S5100 to S5940 are merely an example, and embodiments of the present invention are not limited thereto. In other words, the above-described steps S5100 to S5940 may be performed in a different order, or some of the steps may be simultaneously performed or omitted.

What is not described regarding the Internet shopping mall managing method in connection with Fig. 5 is the same or easily inferred from what has been described regarding the Internet shopping mall managing method in connection with Figs. 1 to 4, and no detailed description thereof is thus presented.

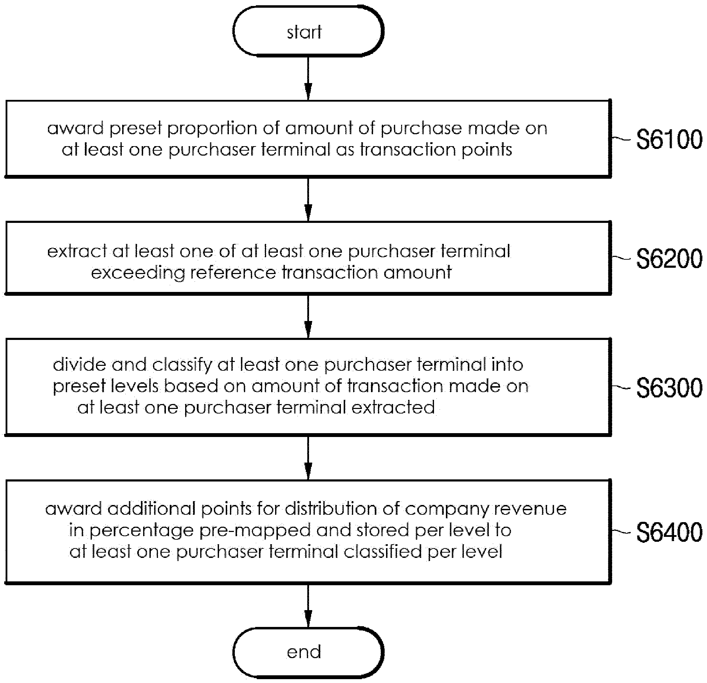

Fig. 6 is a flowchart illustrating a method of managing an Internet shopping mall according to an embodiment of the present invention. Referring to Fig. 6, the Internet shopping mall managing server awards a preset proportion of the amount of purchase made on at least one purchaser terminal as transaction points (S6100).

The Internet shopping mall managing server extracts at least one of the at least one purchaser terminal which exceeds a reference transaction amount (S6200).

The Internet shopping mall managing server divides or classifies the at least one purchaser terminal in preset sections based on the amount of transactions on the at least one purchaser terminal extracted (S6300).

Finally, the Internet shopping mall managing server awards additional points for distributing the company revenue to the at least one purchaser terminal per level and in percentages pre-mapped and stored per level (S6400).

What is not described regarding the Internet shopping mall managing method in connection with Fig. 6 is the same or easily inferred from what has been described regarding the Internet shopping mall managing method in connection with Figs. 1 to 5, and no detailed description thereof is thus presented.

The Internet shopping mall managing method according to an embodiment described with reference to Fig. 6 may be implemented in the form of a recording medium or computer-readable medium containing computer-executable instructions or commands, such as an application or program module executable on a computer. The computer-readable medium may be an available medium that is accessible by a computer. The computer-readable storage medium may include a volatile medium, a non-volatile medium, a separable medium, and/or an inseparable medium. The computer-readable medium may include a computer storage medium and a communication medium. The computer storage medium may include a volatile medium, a non-volatile medium, a separable medium, and/or an inseparable medium that is implemented in any method or scheme to store computer-readable commands, data architecture, program modules, or other data or information. The communication medium may typically include computer-readable commands or instructions, data architectures, program modules, or data of carriers or other modulated data signals, or other transmission mechanisms or any information transmission media.

According to an embodiment, the above-described Internet shopping mall managing method may be executed by an application installed on a terminal, including a platform equipped in the terminal or a program included in the operating system of the terminal), or may be executed by an application (or program) installed by the user on a master terminal via an application providing server, such as a web server, associated with the service or method, an application, or an application store server. According to an embodiment, the above-described Internet shopping mall managing method may be implemented in an application or program installed as default on the terminal or installed directly by the user and may be recorded in a recording medium or storage medium readable by a terminal or computer.

Although embodiments of the present invention have been described with reference to the accompanying drawings, It will be appreciated by one of ordinary skill in the art that the present invention may be implemented in other various specific forms without changing the essence or technical spirit of the present invention. Thus, it should be noted that the above-described embodiments are provided as examples and should not be interpreted as limiting. Each of the components may be separated into two or more units or modules to perform its function(s) or operation(s), and two or more of the components may be integrated into a single unit or module to perform their functions or operations.

It should be noted that the scope of the present invention is defined by the appended claims rather than the described description of the embodiments and include all modifications or changes made to the claims or equivalents of the claims.

## Claims

1. A method of managing an Internet shopping mall, the method executed on an Internet shopping mall managing server, and the method comprising: awarding a preset proportion of an amount of purchase made on at least one purchaser terminal as transaction points;
extracting at least one of the at least one purchaser terminal which exceeds a reference transaction amount;
dividing and classifying the at least one purchaser terminal into preset levels based on the amount of transaction made on the at least one purchaser terminal extracted; and awarding a dividend for company revenue in percentages pre-mapped and stored per level to the at least one purchaser terminal classified per level as additional points.

2. The method of claim 1, wherein the percentages pre-mapped and stored per level increase as the levels depending on the amount of transaction go up.

3. The method of claim 1, further comprising, after awarding the preset proportion of the amount of purchase made on the at least one purchaser terminal as the transaction points, and if such an event occurs where at least one referee terminal referred by the at least one purchaser terminal accesses the Internet shopping mall managing server, awarding referral points to the at least one purchaser terminal.

4. The method of claim 3, wherein the referral points are awarded differentially depending on grades determined based on the number of referrers.

5. The method of claim 4, wherein the referral points are calculated based on the amount and cycle of purchase made on the at least one referee terminal by referral, and wherein the grades for the referral points are updated periodically or in real-time based on the number of referrals and the amount of purchase made on the at least one referee terminal.

6. The method of claim 3, wherein the Internet shopping mall managing server provides a page for outputting the transaction points, additional points and referral points, and Internet shopping mall revenue provided from the Internet shopping mall managing server.

7. The method of claim 6, wherein the transaction points are provided based on the amount of purchase, the additional points are provided in a table corresponding to the classified levels, the referral points are provided in a table corresponding to the assigned grades, and wherein each point type depending on the total of the month before last, transactions of the last month, and transactions of this month is provided in one table.

8. The method of claim 3, wherein the Internet shopping mall managing server periodically distributes the transaction points, the additional points, and the referral points, as cash, at a request or setting of the at least one purchaser terminal.

9. The method of claim 1, further comprising, before awarding the preset proportion of the amount of purchase made on the at least one purchaser terminal as the transaction points, updating inventory for a product corresponding to a keyword entered through the at least one purchaser terminal, price variations, and shipping time; and when information about the product is varied, outputting the varied information to the at least one purchaser terminal.

10. The method of claim 1, wherein the access event includes at least one of a look-up, sign-up, and purchase on the at least one referee terminal in the Internet shopping mall managing server.
